(19) Europäisches Patentamt / European Patent Office / Office européen des brevets

(11) **EP 4 105 142 A1**

(12) **EUROPEAN PATENT APPLICATION**
published in accordance with Art. 153(4) EPC

(43) Date of publication:
**21.12.2022 Bulletin 2022/51**

(21) Application number: **21753770.3**

(22) Date of filing: **10.02.2021**

(51) International Patent Classification (IPC):
**B65D 81/24** *(2006.01)*

(52) Cooperative Patent Classification (CPC):
**B65D 81/24**

(86) International application number:
**PCT/JP2021/005034**

(87) International publication number:
**WO 2021/162051 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2020 JP 2020023537**

(71) Applicant: **TOPPAN INC.**
**Tokyo 110-0016 (JP)**

(72) Inventors:
• **YAMAMOTO, Wataru**
**Tokyo 110-0016 (JP)**
• **SATO, Tetsuo**
**Tokyo 110-0016 (JP)**
• **KUROSE, Yoshifumi**
**Tokyo 110-0016 (JP)**

(74) Representative: **Hoffmann Eitle**
**Patent- und Rechtsanwälte PartmbB**
**Arabellastraße 30**
**81925 München (DE)**

(54) **FREEZING PACKAGING FILM, FREEZING PACKAGING BAG, FROZEN FOOD PACKAGE AND METHOD OF EVALUATING STORAGE PROPERTIES OF FREEZING PACKAGING FILM**

(57) A freezing packaging film having transparency that produces a color difference ($\Delta E$) of 30 or less on a surface of contents when subjected to frozen storage at -20°C for 2 weeks, the contents being a reagent containing 0.14 mass% of methylene blue and having L* of 55 to 65, a* of 3 to 9 and b* of 45 to 55 in a L*a*b* color system.

FIG.1

EP 4 105 142 A1

**Description**

[Technical Field]

The present invention relates to a freezing packaging film, a freezing packaging bag, a frozen food package, and a method for evaluating preservation performance of the freezing packaging film.

[Background Art]

As packaging materials for use with frozen foods and the like, there have been developed film bags using an aluminum foil, which is excellent in oxygen barrier properties, for ensuring preservation of contents. Meanwhile, packaging materials having transparency that allows the contents to be seen are also being developed.
For example, PTLs 1 to 3 disclose a packaging material for frozen foods, in which the packaging material includes a plastic substrate and a thin film layer mainly made of aluminum oxide and silicon oxide, the thin film layer being disposed on at least one surface of the plastic substrate. The packaging material is colorless, transparent, and excellent in flex resistance and oxygen barrier properties.

[Citation List]

[Patent Literature]

PTL 1: JPH061378 A
PTL 2: JPH061369 A
PTL 3: JPH061370 A

[Summary of the Invention]

[Technical Problem]

Frozen foods, in particular frozen meat, fish and the like are often disposed of when discoloration (denaturation) of the contents is found during storage or distribution. The conventional packaging materials having transparency tend to cause the frozen meat, fish and the like to be discolored during storage or distribution, and there is still room for improvement in terms of preservation performance.
The present invention has been made in view of the above circumstances, and is directed to provide a freezing packaging film having transparency and which is excellent in preservation of contents, a freezing packaging bag using the freezing packaging film, a frozen food package including the freezing packaging bag in which a frozen food is contained, and a method for evaluating preservation performance of the freezing packaging film.

[Solution to Problem]

The present invention provides a freezing packaging film having transparency that produces a color difference ($\Delta E$) of 30 or less on a surface of contents when subjected to frozen storage at -20°C for 2 weeks, the contents being a reagent containing 0.14 mass% of methylene blue and having L* of 55 to 65, a* of 3 to 9 and b* of 45 to 55 in a L*a*b* color system.
Furthermore, the present invention provides a freezing packaging film having transparency including a gas barrier film having an oxygen transmission rate, measured according to JIS K-7126, of 2 $cc/m^2 \cdot day \cdot atm$ or less.
Furthermore, the present invention provides a freezing packaging film having transparency including: a gas barrier film; and a sealant layer, wherein the gas barrier film includes a film substrate and an inorganic oxide layer containing an inorganic oxide, the inorganic oxide layer being disposed on a side of the film substrate facing the sealant layer.
The above freezing packaging film may further include an intermediate layer between the gas barrier film and the sealant layer.
The above gas barrier film may further include a gas barrier coating layer made of a composition for forming a gas barrier coating layer containing at least one selected from the group consisting of a hydroxyl group-containing polymer compound, a metal alkoxide, a silane coupling agent, and a hydrolysate thereof, the gas barrier coating layer being disposed on a side of the inorganic oxide layer facing the sealant layer.

The above freezing packaging film according to the present invention may be used for frozen storage of a food product whose surface has a color difference (ΔE) of 10 or more when it is subjected to frozen storage at -25°C for one month in a packaging bag produced from a laminate film formed of a 12 μm-thick polyethylene terephthalate substrate, a 15 μm-thick Nylon film, and a 60 μm-thick sealant layer made of a linear low density polyethylene resin.

Furthermore, the present invention provides a freezing packaging bag produced from the freezing packaging film according to the present invention described above.

Furthermore, the present invention provides a frozen food package including: the freezing packaging bag according to the present invention described above; and a frozen food contained as contents in the freezing packaging bag.

Furthermore, the present invention provides a method for evaluating preservation performance of a freezing packaging film, the method including: producing a freezing packaging bag from a freezing packaging film having transparency, in which a reagent is provided as contents, the reagent containing 0.14 mass% of methylene blue and having L* of 55 to 65, a* of 3 to 9 and b* of 45 to 55 in a L*a*b* color system; and measuring a color difference (ΔE) on a surface of the contents after frozen storage of the freezing packaging bag at -20°C for 2 weeks, wherein evaluation of preservation performance is performed based on the color difference.

[Advantageous Effects of the Invention]

According to the present invention, a freezing packaging film having transparency and which is excellent in preservation of contents, a freezing packaging bag using the freezing packaging film, a frozen food package including the freezing packaging bag in which a frozen food is contained, and a method for evaluating preservation performance of the freezing packaging film can be provided.

[Brief Description of the Drawings]

Fig. 1 is a schematic cross-sectional view of a freezing packaging film according to an embodiment of the present invention.
Fig. 2 is a schematic cross-sectional view of a freezing packaging film according to an embodiment of the present invention.
Fig. 3 is a schematic cross-sectional view of a freezing packaging film according to an embodiment of the present invention.

[Description of the Embodiments]

With reference to the drawings as appropriate, preferred embodiments of the present invention will be described below. Throughout the drawings, the same or corresponding components are denoted by the same reference signs, and repeated description is omitted. Further, dimensional ratios of the drawings are not limited to the ratios shown in the drawings.

[Freezing Packaging Film]

A freezing packaging film according to the present embodiment has transparency, and is excellent in preservation of contents. The transparency described herein requires transparency by which the contents can be easily seen, in particular, a degree of transparency that allows the color and discoloration of the contents to be recognized, and may have a minimum value of visible light transmittance in a wavelength range of 400 nm to 700 nm of, for example, 70% or more, 80% or more or 90% or more. The visible light transmittance of the freezing packaging film is measured by using a spectrophotometer.

The freezing packaging film according to the present embodiment is configured to produce a color difference (ΔE) of 30 or less on a surface of the contents when subjected to frozen storage at -20°C for 2 weeks. The contents may be, for example, a reagent containing 0.14 mass% of methylene blue and having L* of 55 to 65, a* of 3 to 9 and b* of 45 to 55 in the L*a*b* color system.

The color difference is a perceptual color difference between two colors defined by JIS 8730, and ΔE is a quantified value of the difference. More specifically, ΔE is a distance between two points in a color space in the L*a*b* color system, and is calculated by the formula below. L*a*b* is a value measured by a color measurement device such as Exact (trade name) manufactured by X-rite Co. Ltd.

$$\Delta E = \{(\Delta L^*)^2 + (\Delta a^*)^2 + (\Delta b^*)^2\}^{1/2}$$

The freezing packaging film according to the present embodiment can ensure preservation of contents in storage and distribution of frozen foods under frozen conditions. The reason for this seems to be that the freezing packaging film can prevent the contents from being oxidized due to exposure mainly to oxygen or prevent the contents from drying due to release of water vapor from the contents to thereby suppress discoloration (denaturation) of the contents. For this reason, the above color difference ($\Delta E$) is preferably 10 or less, and more preferably 5 or less.

As the contents used for measuring $\Delta E$, methylene blue, which is a reagent that exhibits a deep blue color when reacting with oxygen, is used. More specifically, a reagent containing 0.14 mass% of methylene blue and having $L^*$ of 55 to 65, $a^*$ of 3 to 9 and $b^*$ of 45 to 55 in the $L^*a^*b^*$ color system can be used. This reagent is initially yellow, and turns blue on reacting with oxygen.

Preferred examples of the reagent include a reagent gel containing 0.14 mass% of methylene blue, 0.09 mass% of sucrose fatty acid ester, 1.4 mass% of agar powder, 0.04 mass% of sodium hydroxide and 5.6 mass% of D-glucose in an aqueous solution. This reagent gel can be obtained by dissolving 1.5 g of sucrose fatty acid ester in 1500 ml of heated water, adding and dissolving 22.5 g of agar powder, 0.72 g of sodium hydroxide, 90 g of D-glucose and 0.225 g of methylene blue in the solution, and boiling it for 10 minutes to remove oxygen.

The reagent described above is provided as the contents of the freezing packaging film. After the contents are sealed in a bag produced from the freezing packaging film, the initial $L^*a^*b^*$ color system values of the contents (reagent) are measured. The measurements of the $L^*a^*b^*$ color system may be 55 to 65 for $L^*$, 3 to 9 for $a^*$, and 45 to 55 for $b^*$, which are the same as those described above. Then, the $L^*a^*b^*$ color system values of the contents (reagent) after frozen storage at -20°C for 2 weeks are measured to calculate a color difference ($\Delta E$) from the initial $L^*a^*b^*$ color system values. The $L^*a^*b^*$ color system values of the contents (reagent) after frozen storage can be measured immediately after the contents are taken out from the freezing packaging film, but is preferably measured in a state of being sealed in the freezing packaging film in order to minimize exposure to oxygen.

The freezing packaging film according to the present embodiment may include a gas barrier film having an oxygen transmission rate of, for example, 2 cc/m$^2$·day·atm or less. The oxygen transmission rate refers to a value measured according to JIS K-7126. More specifically, the oxygen transmission rate is measured according to JIS K-7126, method B (equal-pressure method) under the conditions of 30°C and 70% RH using an oxygen transmission rate measurement device (manufactured by MOCON Inc., trade name: OX-TRAN 2/20). The same measurement is performed three times, and the average of these measurements is adopted. The freezing packaging film using the gas barrier film having the oxygen transmission rate less than or equal to the upper limit can reduce the amount of oxygen to which the contents are exposed during storage and transport, and more effectively preserve the contents. From this point of view, the freezing packaging film according to the present embodiment more preferably includes a gas barrier film having the oxygen transmission rate of 0.5 cc/m$^2$·day·atm or less.

In addition, the above-mentioned gas barrier film may have a water vapor transmission rate of 3 g/m$^2$·day or less. The water vapor transmission rate refers to a value measured according to JIS K-7126. More specifically, the water vapor transmission rate is measured according to JIS K-7126, method B (equal-pressure method) under the conditions of 40°C and 90% RH using a water vapor transmission rate measurement device (manufactured by MOCON Inc., trade name: PERMATRAN-W 3/33). The same measurement is performed three times, and the average of these measurements is adopted. Freezing packaging films having a water vapor transmission rate less than or equal to the upper limit can more effectively preserve the contents during storage and transport. From this point of view, the water vapor transmission rate of the gas barrier film is preferably 1 g/m$^2$·day or less.

A specific configuration of a preferred freezing packaging film according to the present embodiment will be described below.

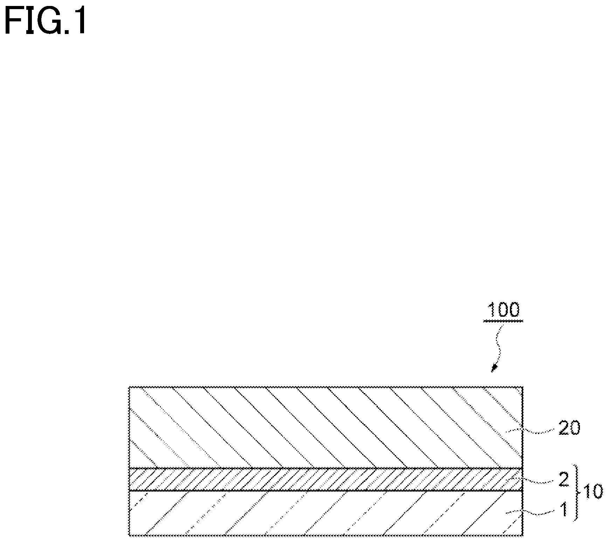

Fig. 1 is a schematic cross-sectional view of a freezing packaging film according to an embodiment of the present invention. A freezing packaging film 100 shown in Fig. 1 includes a gas barrier film 10 and a sealant layer 20. The gas barrier film 10 includes a film substrate 1 and an inorganic oxide layer 2, and the inorganic oxide layer 2 is disposed on a side of the gas barrier film 10 facing the sealant layer 20.

<Gas Barrier Film>

Each layer constituting the gas barrier film 10 will be described.

(Film Substrate)

The film substrate 1 may be of a resin generally used as a packaging material, without particular limitation. Examples of the material include polyolefin resin (polyethylene resin, polypropylene resin, etc.), polyester resin (polyethylene terephthalate (PET) resin, polybutylene terephthalate (PBT) resin, polyethylene naphthalate (PEN) resin, etc.), amide resin such as Nylon, polyvinyl chloride, polyimide, copolymers of these polymers, and the like. These resins may be used alone or as a mixture of two or more. The film substrate 1 is appropriately selected depending on the application, but preferably contains a PET resin from the viewpoint of preservation of the contents and impact resistance.

The film substrate 1 may be an unstretched film substrate or a stretched film substrate, but is preferably a stretched film substrate. A stretched film substrate is more suitable as a film substrate constituting the freezing packaging film since it is excellent in strength, dimensional stability, impact resistance, and water resistance compared with those of an unstretched film substrate. The stretching method is not particularly limited, and may be any stretching method, such as inflation, uniaxial stretching, or biaxial stretching, as long as a dimensionally stable film can be provided.

The thickness of the film substrate 1 is not particularly limited. The thickness may be approximately 12 to 100 $\mu$m depending on the application, but is preferably 12 to 25 $\mu$m. When the film substrate 1 has a thickness of greater than or equal to the lower limit, excellent impact resistance and excellent gas barrier properties can be obtained. When the film substrate 1 has a thickness of less than or equal to the upper limit, a sufficiently thin packaging film can be easily obtained.

Moreover, a lamination surface (a surface on which the inorganic oxide layer 2 and the like are to be laminated) of the film substrate 1 may be subjected to various types of pretreatment such as corona treatment, plasma treatment, and flame treatment to such an extent that the barrier properties are not impaired, or a coating layer such as an adhesion-enhancement layer may be provided on the lamination surface.

(Inorganic Oxide Layer)

The inorganic oxide layer 2 is a layer containing an inorganic oxide. Examples of the inorganic oxide include a metal oxide represented as $SiO_x$, $AlO_x$ or the like, and a mixture thereof. Among these inorganic oxides, silicon oxide is particularly preferred.

In particular, the inorganic oxide layer 2 is preferably a layer using silicon oxide as a vapor deposition layer having high tensile stretchability at the time of processing.

In the inorganic oxide layer 2 using silicon oxide, the O/Si ratio of the inorganic oxide layer 2 is preferably 1.7 or more. An O/Si ratio of 1.7 or more can suppress the content of Si metal, and facilitates increased transparency. Further, the O/Si ratio is preferably 2.0 or less. An O/Si ratio of 2.0 or less can prevent the inorganic oxide layer from becoming too hard due to increased crystallinity of SiO, and provides good tensile resistance. This prevents occurrence of cracking in the inorganic oxide layer 2, for example, in lamination of a gas barrier coating layer described later.

The O/Si ratio of the inorganic oxide layer 2 can be determined by X-ray photoelectron spectroscopy (XPS). For example, an X-ray photoelectron spectrometer (manufactured by JEOL Ltd., trade name: JPS-90MXV) can be used as a measurement device, using an X-ray source of nonmonochromatic MgK$\alpha$ (1253.6 eV), with an X-ray output of 100 W (10kV-10mA). The relative sensitivity factors of 2.28 for O1s and 0.9 for Si2p can be used.

The film thickness of the inorganic oxide layer 2 is preferably 10 nm or more and 50 nm or less. The film thickness of 10 nm or more can provide sufficient water vapor barrier properties. The film thickness of 50 nm or less can reduce occurrence of cracking caused by deformation due to internal stress of the thin film, and prevent deterioration of water vapor barrier properties. In addition, the film thickness of 50 nm or less can prevent a cost increase due to an increase in material usage, film formation time, or the like, which is preferred from an economic viewpoint. From the same viewpoint as above, the film thickness of the inorganic oxide layer 2 is more preferably 20 nm or more and 40 nm or less.

The inorganic oxide layer 2 can be formed by, for example, vacuum deposition. In vacuum film formation, a physical vapor deposition method or a chemical vapor deposition method can be used. Examples of the physical vapor deposition include, but are not limited to, vacuum vapor deposition, sputtering, and ion plating. Examples of the chemical vapor deposition include, but are not limited to, thermal CVD, plasma CVD, and photo CVD.

Specifically, resistance heating vacuum vapor deposition, electron beam (EB) heating vacuum vapor deposition, induction heating vacuum vapor deposition, sputtering, reactive sputtering, dual magnetron sputtering, plasma-enhanced chemical vapor deposition (PECVD), and the like are preferably used for the vacuum deposition. In view of productivity, vacuum vapor deposition is currently most preferable. As a heating means for vacuum vapor deposition, it is preferred to use one of electron beam heating, resistive heating, and inductive heating.

(Gas Barrier Coating Layer)

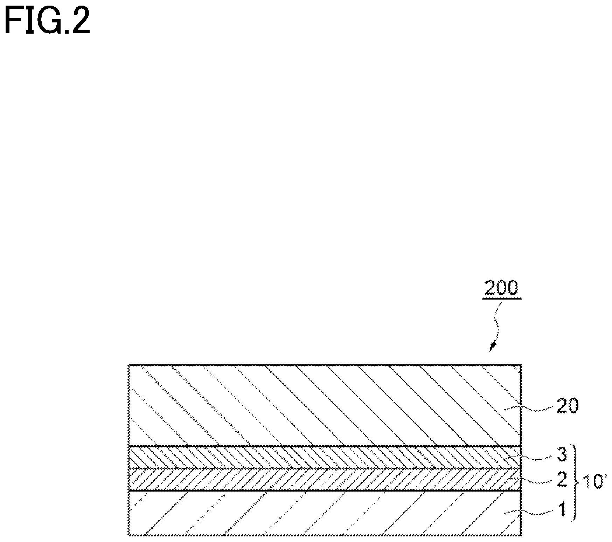

The gas barrier film may further include a gas barrier coating layer on a side of the inorganic oxide layer opposite to that facing the film substrate. For example, Fig. 2 is a schematic cross-sectional view of a freezing packaging film according to an embodiment of the present invention, in which a gas barrier coating layer is included. A freezing packaging film 200 shown in Fig. 2 includes a gas barrier film 10' and the sealant layer 20. The gas barrier film 10' includes the film substrate 1, the inorganic oxide layer 2 and the gas barrier coating layer 3, disposed in this order, and the gas barrier coating layer 3 is disposed adjacent to the sealant layer 20.

The gas barrier coating layer 3 is a layer made of a composition for forming a gas barrier coating layer containing at least one selected from the group consisting of a hydroxyl group-containing polymer compound, a metal alkoxide, a silane coupling agent, and a hydrolysate thereof.

The gas barrier coating layer 3 is a coating layer having gas barrier properties, and is made of a composition for forming a gas barrier coating layer (hereinafter, referred to as a "coating agent") containing, as a main component, an aqueous solution or a water/alcohol mixture solution containing at least one selected from the group consisting of a hydroxyl group-containing polymer compound, a metal alkoxide, a silane coupling agent, and a hydrolysate thereof. The coating agent preferably contains at least one selected from the group consisting of a hydroxyl group-containing polymer compound, a metal alkoxide, and a hydrolysate thereof; more preferably contains a silane coupling agent or a hydrolysate thereof, and at least one selected from the group consisting of a hydroxyl group-containing polymer compound, a metal alkoxide, and a hydrolysate thereof; and still more preferably contains a hydroxyl group-containing polymer compound or a hydrolysate thereof, a metal alkoxide or a hydrolysate thereof, and a silane coupling agent or a hydrolysate thereof in order to more reliably maintain gas barrier properties when frozen. The coating agent can be prepared by, for example, adding a metal alkoxide and a silane coupling agent directly or after being subjected to a treatment such as hydrolysis in advance to a solution in which a hydroxyl group-containing polymer compound as a water-soluble polymer is dissolved in an aqueous (water or water/alcohol mixture) solvent.

The details of the components contained in the coating agent for forming the gas barrier coating layer 3 will be described. Examples of the hydroxyl group-containing polymer compound used for the coating agent include polyvinyl alcohol (PVA), polyvinyl pyrrolidone, starch, methyl cellulose, carboxymethyl cellulose, and sodium alginate. Among these, polyvinyl alcohol (PVA) is preferably used for the coating agent of the gas barrier coating layer 3 due to particularly excellent gas barrier properties.

In order to obtain excellent gas barrier properties, the gas barrier coating layer 3 is preferably formed from a composition containing at least one selected from the group consisting of a metal alkoxide represented by the following general formula (1) and a hydrolysate thereof.

$$M(OR^1)_m(R^2)_{n-m} \cdots \qquad (1)$$

In general formula (1), $R^1$ and $R^2$ are each independently a monovalent organic group having 1 to 8 carbon atoms, and are preferably an alkyl group such as a methyl group or an ethyl group. M represents an n-valent metal atom such as Si, Ti, Al or Zr. m represents an integer from 1 to n. When a plurality of $R^1$s or $R^2$s are present, the $R^1$s or the $R^2$s may be the same or different.

Specific examples of the metal alkoxide include tetraethoxysilane [$Si(OC_2H_5)_4$] and triisopropoxyaluminum [$Al(O-2'-C_3H_7)_3$]. Tetraethoxysilane and triisopropoxy aluminum are preferred since they are relatively stable in an aqueous solvent after hydrolysis.

Examples of the silane coupling agent include compounds represented by the following general formula (2).

$$Si(OR^{11})_p(R^{12})_{3-p}R^{13} \cdots \qquad (2)$$

In general formula (2), $R^{11}$ represents an alkyl group such as a methyl group or an ethyl group, $R^{12}$ represents a monovalent organic group such as an alkyl group, an aralkyl group, an aryl group, an alkenyl group, an alkyl group substituted with an acryloxy group, or an alkyl group substituted with a methacrylate group, $R^{13}$ represents a monovalent organic functional group, and p represents an integer of 1 to 3. When a plurality of $R^{11}$s or $R^{12}$s are present, the $R^{11}$s or the $R^{12}$s may be the same or different. Examples of the monovalent organic functional group represented by $R^{13}$ include a glycidyloxy group, an epoxy group, a mercapto group, a hydroxyl group, an amino group, an alkyl group substituted with a halogen atom, or a monovalent organic functional group containing an isocyanate group.

Specific examples of the silane coupling agent include vinyltrimethoxysilane, γ-chloropropylmethyldimethoxysilane, γ-chloropropyltrimethoxysilane, glycidoxypropyltrimethoxysilane, γ-methacryloxypropyltrimethoxysilane and γ-methacryloxypropylmethyldimethoxysilane.

The silane coupling agent may be a multimer obtained by polymerizing the compound represented by general formula (2). The multimer is preferably a trimer, and more preferably 1,3,5-tris (3-trialkoxysilylalkyl) isocyanurate. This is a condensation product of 3-isocyanate alkyl alkoxysilane. It is known that the 1,3,5-tris (3-trialkoxysilylalkyl) isocyanurate has no chemical reactivity in the isocyanate moiety, but the reactivity is ensured by the polarity of the isocyanurate moiety. Generally, 1,3,5-tris (3-trialkoxysilylalkyl) isocyanurate, like 3-isocyanate alkyl alkoxysilane, is added to an adhesive or the like, and is known to serve as an adhesion-enhancing agent. Therefore, by adding 1,3,5-tris (3-trialkoxysilylalkyl) isocyanurate to the hydroxyl group-containing polymer compound, the water resistance of the gas barrier coating layer 3 can be improved by hydrogen bonding. While 3-isocyanate alkyl alkoxysilane has high reactivity and low liquid stability, the isocyanurate moiety of 1,3,5-tris (3-trialkoxysilylalkyl) isocyanurate is easily dispersed in an aqueous solution and stably maintains viscosity, although it is not water soluble due to the polarity. Further, the water resistance performance of 3-isocyanate alkyl alkoxysilane is equivalent to that of 1,3,5-tris (3-trialkoxysilylalkyl) isocyanurate.

Some 1,3,5-tris (3-trialkoxysilylalkyl) isocyanurate is produced by thermal condensation of 3-isocyanate alkyl alkoxysilane, and may contain 3-isocyanate alkyl alkoxysilane from the base material, but this poses no particular problem. More preferably, the compound is 1,3,5-tris (3-trialkoxysilylpropyl) isocyanurate, and even more preferably 1,3,5-tris (3-trimethoxysilylpropyl) isocyanurate. 1,3,5-tris (3-trimethoxysilylpropyl) isocyanurate is practically advantageous since the methoxy group has a fast hydrolysis rate and compounds containing a propyl group can be obtained at a relatively low cost.

The coating agent may further contain, as necessary, isocyanate compounds or known additives such as a dispersant, a stabilizer, a viscosity modifier and a colorant to such an extent that the gas barrier properties are not impaired.

The gas barrier coating layer 3 preferably has a thickness of 50 nm to 1,000 nm, and more preferably 100 nm to 500 nm. The thickness of 50 nm or more tends to achieve more sufficient gas barrier properties in the gas barrier coating layer 3, and the thickness of 1,000 nm or less tends to maintain sufficient flexibility.

The coating agent for forming the gas barrier coating layer 3 can be applied by a coating method such as dipping, roll coating, gravure coating, reverse gravure coating, air knife coating, comma coating, die coating, screen printing, spray coating, gravure offset, or the like. The coating film formed by applying the coating agent can be dried by, for example, hot air drying, hot roll drying, high frequency irradiation, infrared irradiation, UV irradiation, or a combination thereof. Hot air drying is most preferable for drying the coating film considering high-speed processability.

In order to enhance adhesion of the gas barrier coating layer 3 to the sealant layer 20 or the like, which is described later, a surface of the gas barrier coating layer 3 may be subjected to various pretreatments such as corona treatment, plasma treatment and flame treatment, or may be provided with a coating layer such as an adhesion-enhancement layer.

(Adhesion Layer)

The gas barrier film according to the present embodiment may include, as necessary, an adhesion layer between the film substrate and the inorganic oxide layer in order to enhance adhesion between the film substrate and the inorganic oxide layer and form a smooth surface that facilitates formation of a uniform, defect-free inorganic oxide layer in the subsequent step to thereby achieve high barrier properties. The adhesion layer can be formed by using an anchor coat agent.

The adhesion layer is made of a composition for forming an adhesion layer (hereinafter, referred to as an "anchor coat agent"). Examples of the anchor coat agent include a polyester-based polyurethane resin, a polyether-based polyurethane resin, and the like. Among these anchor coat agents, polyester-based polyurethane resin is preferred from the viewpoint of heat resistance and interlayer adhesion strength.

Although the thickness of the adhesion layer is not particularly limited, the thickness is preferably in the range of 0.01 $\mu$m to 5 $\mu$m, more preferably 0.03 $\mu$m to 3 $\mu$m, and still more preferably 0.05 $\mu$m to 2 $\mu$m. When the thickness of the adhesion layer is greater than or equal to the lower limit, sufficient interlayer adhesion strength tends to be achieved. When the thickness is less than or equal to the upper limit, desired gas barrier properties tends to be achieved.

For coating the film substrate with the adhesion layer, a known coating method can be used without particular limitation. Examples of the coating method include an immersion (dipping) method and methods that use a sprayer, a coater, a printer, a brush, and the like. In addition, examples of the types of coaters and printers used in these methods, and the coating methods thereof include a gravure coater, a reverse-roll coater, a micro gravure coater, a chamber doctor coater, an air-knife coater, a dip coater, a bar coater, a comma coater, a die coater, and the like for a direct gravure method, a reverse gravure method, a kiss reverse gravure method, an offset gravure method, and the like.

Further, as for the coating amount of the adhesion layer, the mass per m$^2$ of the dry amount of the anchor coat agent is preferably 0.01 to 5 g/m$^2$, and more preferably 0.03 to 3 g/m$^2$. When the mass per m$^2$ of the dry amount of the anchor coat agent is greater than or equal to the lower limit, sufficient film formation tends to be achieved. When the dry amount of the anchor coat agent is less than or equal to the upper limit, the anchor coat agent tends to be sufficiently dried with little residual solvent.

A method of drying the adhesion layer may be, but is not limited to, natural drying, drying in an oven set at a predetermined temperature, or drying using a dryer attached to the coater described above, such as an arch dryer, a floating dryer, a drum dryer or an infrared dryer. The drying conditions can be appropriately selected depending on the drying method. For example, in a method of drying in an oven, it is preferred to dry at a temperature of 60 to 100°C for approximately 1 second to 2 minutes.

The thickness of the gas barrier film can be appropriately set depending on the application, and is not particularly limited. The thickness is preferably in the range of 12 $\mu$m to 100 $\mu$m, and more preferably in the range of 12 $\mu$m to 50 $\mu$m. The thickness of 12 $\mu$m or more is suitable for production of the gas barrier film, and the thickness of 100 $\mu$m or

less tends to ensure sufficient flexibility.

<Method of Producing Gas Barrier Film>

A method of producing a gas barrier film according to the present embodiment includes: laminating an inorganic oxide layer containing an inorganic oxide on one surface of a film substrate; and forming a gas barrier coating layer on the inorganic oxide layer, as necessary, using a composition for forming a gas barrier coating layer containing at least one selected from the group consisting of a hydroxyl group-containing polymer compound, a metal alkoxide, a silane coupling agent, and a hydrolysate thereof. As the film substrate, the aforementioned film substrate 1 can be used.

The method of producing a gas barrier film according to the present embodiment may further include forming an adhesion layer on the film substrate.

In addition, the layers in the method of producing a gas barrier film according to the present embodiment can be produced using the methods described in the above description of the gas barrier film.

<Sealant Layer>

The sealant layer 20 is typically made of a polyolefin-based resin among thermoplastic resins. More specifically, low-density polyethylene resin (LDPE), medium-density polyethylene resin (MDPE), linear low-density polyethylene resin (LLDPE), ethylene-vinyl acetate copolymer (EVA), ethylene-$\alpha$-olefin copolymer, ethylene-(meth)acrylic acid copolymer, blended resin of polyethylene and polybutene, homopolypropylene resin (PP), propylene-ethylene random copolymer, propylene-ethylene block copolymer, propylene-$\alpha$-olefin copolymer, and other polypropylene-based resins can be used. These thermoplastic resins can be appropriately selected depending on the temperature conditions such as the application.

The thickness of the sealant layer 20 is determined by the mass of the contents, the shape of the packaging bag, and the like. In general, the thickness is preferably 30 to 150 $\mu$m.

The sealant layer 20 can be formed by a known lamination method such as dry lamination in which the film-shaped sealant layer 20 made of the above-mentioned thermoplastic resin is bonded with an adhesive such as an one-part or two-part curing type urethane-based adhesive, non-solvent dry lamination in which the sealant layer 20 on the film is bonded with a solventless adhesive, or extrusion lamination in which the above-mentioned thermoplastic resin is heated, melted, extruded in a curtain shape, and bonded.

<Intermediate Layer>

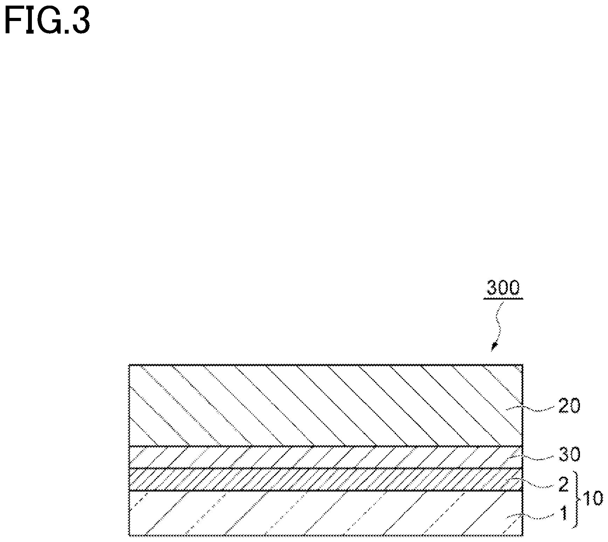

The freezing packaging film according to the present embodiment may further include an intermediate layer between the gas barrier film and the sealant layer. For example, Fig. 3 is a schematic cross-sectional view of a freezing packaging film according to an embodiment of the present invention, in which an intermediate layer is included. A freezing packaging film 300 shown in Fig. 3 includes the gas barrier film 10, the sealant layer 20, and an intermediate layer 30 provided between the gas barrier film 10 and the sealant layer 20. The intermediate layer can improve puncture resistance and impact resistance in a frozen state. The intermediate layer can be made of the same resin as that used for the film substrate 1. In particular, stretched nylon is preferably used from the viewpoint of puncture resistance and impact resistance. The thickness of the intermediate layer 30 can be appropriately set and is not particularly limited. For example, the thickness may be in the range of 12 $\mu$m to 100 $\mu$m, or may be in the range of 12 $\mu$m to 50 $\mu$m.

In order to ensure puncture resistance and impact resistance of the freezing packaging film in a frozen state, the film used as the intermediate layer 30 preferably has a puncture strength in a -20°C environment of 10 N or more since pinholes are more likely to occur in a frozen state than at room temperature. Depending on the contents, the film constituting the intermediate layer 30 may have a puncture strength of 15 N or more. Moreover, the freezing packaging film may have a puncture strength of 20 N or more.

<Adhesive Layer>

The layers in the freezing packaging film according to the present embodiment can be laminated with a general adhesive.

The adhesive can be made of, for example, polyester-isocyanate-based resin, urethane resin, polyether-based resin, or the like.

<Print Layer>

The freezing packaging film according to the present embodiment may include a print layer on a gas barrier surface of the gas barrier film without significantly imparting the advantageous effect of the present invention. The print layer is provided on a layer of the freezing packaging film that can be externally visible for the purpose of displaying the information about the contents, identifying the contents, or improving the design. The printing method and printing ink are not specifically limited, and may be appropriately selected from known printing methods and printing inks in consideration of printability to a film, designability such as tone, adhesion, safety for a food container, and the like. Examples of the printing method include gravure printing, offset printing, gravure offset printing, flexographic printing, ink jet printing, and the like. In particular, gravure printing is preferably used from the viewpoint of productivity and high precision in design.

[Freezing Packaging Bag]

A freezing packaging bag according to the present embodiment is produced from the freezing packaging film according to the present embodiment. The freezing packaging bag is formed by folding a single sheet of the freezing packaging film in half with the sealant layer inside and then heat-sealing three sides to form a bag shape, or by overlapping two freezing packaging films with the sealant layer inside and then heat-sealing four sides to form a bag shape.

[Frozen Food Package]

The freezing packaging bag can contain contents such as frozen food and can be provided as a frozen package. The frozen foods as contents may be, for example, frozen meat, fish and the like. The frozen food package according to the present embodiment is excellent in preservation of contents even under the frozen storage conditions of, for example, -20°C to -25°C. The frozen package may be degassed in order to prevent evaporation of moisture from the contents inside the package.

Therefore, the freezing packaging film according to the present embodiment is particularly effective as a film for preserving foods that are likely to become discolored during storage. Examples of foods that are likely to become discolored during storage include food products (meat such as beef, lean fish in particular, and fruits that are likely to be discolored due to oxidation, such as cherries) whose surface has a color difference ($\Delta$E) of 10 or more when subjected to frozen storage at -25°C for one month in a packaging bag produced from a laminate film other than the freezing packaging film of the present embodiment. The laminate film may be formed of, for example, a 12 $\mu$m-thick polyethylene terephthalate substrate, a 15 $\mu$m-thick Nylon film, and a 60 $\mu$m-thick sealant layer made of a linear low density polyethylene resin.

[Method for Evaluating Freezing Packaging Film]

A color difference ($\Delta$E) of the contents can be measured and calculated for use as an index of preservation performance of the freezing packaging film.

That is, evaluation of the preservation performance of a freezing packaging film can be performed by: producing a freezing packaging bag from a freezing packaging film having transparency, in which a reagent is provided as contents, the reagent containing 0.14 mass% of methylene blue and having $L^*$ of 55 to 65, $a^*$ of 3 to 9 and $b^*$ of 45 to 55 in the $L^*a^*b^*$ color system; and measuring a color difference ($\Delta$E) on a surface of the contents after frozen storage of the freezing packaging bag at -20°C for 2 weeks, wherein evaluation of preservation performance is performed based on the color difference.

The freezing packaging film can be regarded as having excellent preservation performance, suppressing discoloration of the contents when the color difference measured by the above-mentioned method is 30 or less, preferably 10 or less, and still more preferably 5 or less, for example.

Examples

The present invention will be described in more detail below with reference to examples. However, the present invention should not be construed as being limited to the following examples.

[Preparation of Composition for Forming Gas Barrier Coating Layer (Coating Agent)]

Liquid A/liquid B/liquid C shown below were mixed at 70/20/10 (solid content weight ratio) to prepare a composition for forming a gas barrier coating layer.
Liquid A: Hydrolyzed solution with a solid content of 5 mass% (equivalent to $SiO_2$) obtained by adding 72.1 g of 0.1N hydrochloric acid to 17.9 g of tetraethoxysilane ($Si(OC_2H_5)_4$) and 10 g of methanol, and stirring the mixture for 30 minutes for hydrolysis

Liquid B: Water/methanol = 95/5 (mass ratio) aqueous solution containing 5% (mass ratio) of polyvinyl alcohol

Liquid C: Hydrolyzed solution obtained by diluting 1,3,5-tris (3-trialkoxysilylpropyl) isocyanurate with water/isopropyl alcohol mixture solution (water : isopropyl alcohol at a mass ratio of 1:1) to a solid content of 5 mass%

[Preparation of Composition for Forming Adhesion-Enhancing Layer (Anchor Coat Agent)]

Acrylic polyol and tolylene diisocyanate were mixed so that the number of NCO groups of the tolylene diisocyanate was equivalent to the number of OH groups of the acrylic polyol, and then the mixture was diluted with ethyl acetate so that the total solid content (total amount of acrylic polyol and tolylene diisocyanate) was 5 mass%. Further, β-(3,4-epoxycyclohexyl)trimethoxysilane, in an amount of 5 parts by mass relative to 100 parts by mass of the total amount of acrylic polyol and tolylene diisocyanate, was added to the diluted mixture and mixed to prepare a composition for forming an adhesion layer (anchor coat agent).

[Production of Gas Barrier Film]

Polyethylene terephthalate (PET) having 12 $\mu$m thickness was provided as a substrate. A composition for forming an adhesion layer was applied to the upper surface of the substrate by a gravure roll coating method, dried and cured at 60°C. Thus, an adhesion layer having a coating amount of polyester resin of 0.1 g/cm$^2$ was formed. Then, a transparent inorganic oxide layer (silica deposition film) made of a silicon oxide was formed at 30 nm thickness with an electron beam heating method using a vapor deposition apparatus.

Then, a composition for forming a gas barrier coating layer was applied to a surface of the inorganic oxide layer by a gravure roll coating method, heated and dried in an oven at a tension of 20 N/M and under conditions that a temperature of the surface of the coating film became 100°C. Thus, a gas barrier coating layer having 0.3 $\mu$m thickness was formed. Heat drying was performed by attaching a heat label (manufactured by Micron Corporation) to a surface of the coating film before drying, checking the temperature after drying, and adjusting the oven temperature to a desired temperature (in this example, 100°C). Thus, a gas barrier film having a laminate structure of the film substrate (12 $\mu$m) / adhesion layer (0.1 g/cm$^2$) / inorganic oxide layer (30 nm) / gas barrier coating layer (0.3 $\mu$m) was obtained.

[Performance Evaluation of Gas Barrier Film]

(Measurement of Oxygen Transmittance Rate)

The oxygen transmission rate of the gas barrier film was measured under conditions of 30°C and 70% RH using an oxygen transmission rate measurement device (manufactured by MOCON Inc., trade name: OX-TRAN 2/20). The measurement method was in accordance with JIS K-7126, method B (equal-pressure method), and the measurements were expressed in units of [cc/m$^2$·day·MPa]. The same measurement was performed three times, and the average of these measurements was adopted.

(Measurement of Water Vapor Transmission Rate)

The water vapor transmission rate of the gas barrier film was measured under conditions of 40°C and 90% RH using a water vapor transmission rate measurement device (manufactured by MOCON Inc., trade name: PERMATRAN-W 3/33). The measurement method was in accordance with JIS K 7126, method B (equal-pressure method), and the measurements were expressed in units of [g/m$^2$·day]. The same measurement was performed three times, and the average of these measurements was adopted.

[Production of Freezing Packaging Film]

(Example 1)

A 15 $\mu$m-thick stretched Nylon (Ny) film (manufactured by UNITIKA LTD., trade name: EMBLEM ONM) and a 60 $\mu$m-thick linear low density polyethylene resin (LLDPE) film (manufactured by TAMAPOLY CO., LTD., trade name: V-1) were laminated on a gas barrier coating layer of the transparent gas barrier film obtained as above via an adhesive layer made of a two-part curing type urethane adhesive by dry lamination. Thus, a packaging film having a laminate structure of the gas barrier film / adhesive layer / intermediate layer / adhesive layer / sealant layer was obtained. The obtained packaging film had a minimum value of the visible light transmittance in a wavelength range of 400 nm to 700 nm of 80% or more.

The puncture strength at -20°C of the PET film used for the gas barrier film, the Ny film, and the packaging film were measured by the method below and found to be 14.7 N and 8.8 N, respectively.

(Measurement of Puncture Strength)

Each puncture strength was measured according to the puncture strength test described in JIS Z 1707:1999 except that the measurement apparatus was installed in a freezer and the measurement environment was set to a temperature of -20°C.

(Comparative Example 1)

A laminate film having a laminate structure of a PET film / adhesive layer / intermediate layer / adhesive layer / sealant layer was obtained in the same manner as in Example 1 except that a 12 μm-thick polyethylene terephthalate (PET) was used instead of the gas barrier film. The obtained laminate film had a minimum value of the visible light transmittance in a wavelength range of 400 nm to 700 nm of 80% or more.

[Production of Packaging Bag]

The packaging film of Example 1 and the laminate film of Comparative Example 1 were each cut into two sheets of 15 cm × 10 cm size. The two sheets of the film thus cut were overlapped with each other with the sealant layer inside, and the three sides were sealed by impulse sealing. Then, contents were placed inside the package, and the remaining one side was sealed by impulse sealing. Thus, four-side-sealed packaging bags were prepared.

[Performance Evaluation of Packaging Film]

(Preparation of Reagent Gel)

A reagent gel was prepared by dissolving 1.5 g of sucrose fatty acid ester in 1500 ml of heated water, adding and dissolving 22.5 g of agar powder, 0.72 g of sodium hydroxide, 90 g of D-glucose and 0.225 g of methylene blue in the solution, and boiling it for 10 minutes to remove oxygen. This reagent gel is initially yellow, and turns blue on reacting with oxygen.

(Measurement of Color Difference (ΔE))

The packaging film of Example 1 and the laminate film of Comparative Example 1 were each cut into two sheets of 15 cm × 10 cm size. The two sheets of the film thus cut were overlapped with each other with the sealant layer inside, and the three sides were sealed by impulse sealing. 120 ml of the reagent gel obtained as above was provided as contents, and the remaining one side was sealed by impulse sealing. Thus, four-side-sealed packaging bags were produced. In Example 1, the produced packaging bag was subjected to frozen storage at -20°C for 2 weeks and 1 month. In Comparative Example 1, the produced packaging bag was subjected to frozen storage at -20°C for 2 weeks. Then, the L*a*b* color system values of the reagent gel sealed in the packaging bag were measured in a state of being sealed in the packaging bag. The measurement was performed using a color measurement device (manufactured by X-rite Co. Ltd., trade name: Exact), and a color difference (ΔE) from the initial L*a*b* was calculated. Table 1 shows the results.

[Table 1]

|  | Frozen duration | L* | a* | b* | ΔE |
|---|---|---|---|---|---|
| Initial | - | 60.24 | 6.09 | 52.13 | - |
| Example 1 | 2 weeks | 62.24 | 5.37 | 52.86 | 2.25 |
|  | 1 month | 62.47 | 4.35 | 52.86 | 3.16 |
| Comparative Example 1 | 2 weeks | 33.59 | -1.12 | 0.11 | 58.89 |

[Production of Frozen Food Package]

Lean fish (Japanese Amberjack) was degassed and packaged using the packaging film of Example 1 and the laminate film of Comparative Example 1 to provide frozen food packages. After the packages were subjected to frozen storage at -25°C for 1 month, the L\*a\*b\* color system values of the meat in a state of being sealed in the film were measured using a color measurement device (manufactured by X-rite Co. Ltd., trade name: Exact), and a color difference (ΔE) from the initial L\*a\*b\* values was calculated. Table 2 shows the results.

[Table 2]

|  | Frozen duration | L* | a* | b* | ΔE |
|---|---|---|---|---|---|
| Initial | - | 40.326 | 15.489 | 3.787 | - 15 |
| Example 1 | 1 month | 38.14 | 15.21 | 3.59 | 2.21 |
| Comparative Example 1 | 1 month | 35.57 | 5.62 | 5.02 | 11.02 |

[Reference Signs List]

1           Film substrate,
2           Inorganic oxide layer,
3           Gas barrier coating layer,
10, 10'     Gas barrier film,
20          Sealant layer,
30          Intermediate layer,
100, 200, 300   Freezing packaging film.

**Claims**

1.  A freezing packaging film having transparency that produces a color difference (ΔE) of 30 or less on a surface of contents when subjected to frozen storage at -20°C for 2 weeks, the contents being a reagent containing 0.14 mass% of methylene blue and having L\* of 55 to 65, a\* of 3 to 9 and b\* of 45 to 55 in a L\*a\*b\* color system.

2.  A freezing packaging film having transparency comprising a gas barrier film having an oxygen transmission rate measured according to JIS K-7126 of 2 cc/m$^2$·day·atm or less.

3.  A freezing packaging film having transparency comprising:

    a gas barrier film; and
    a sealant layer, wherein
    the gas barrier film includes a film substrate and an inorganic oxide layer containing an inorganic oxide, the inorganic oxide layer being disposed on a side of the film substrate facing the sealant layer.

4.  The freezing packaging film according to claim 3, further comprising an intermediate layer between the gas barrier film and the sealant layer.

5.  The freezing packaging film according to claim 4, wherein the intermediate layer has a puncture strength at -20°C of 10 N or more.

6.  The freezing packaging film according to any one of claims 3 to 5, wherein

    the gas barrier film further includes a gas barrier coating layer made of a composition for forming a gas barrier coating layer containing at least one selected from the group consisting of a hydroxyl group-containing polymer compound, a metal alkoxide, a silane coupling agent, and a hydrolysate thereof, and
    the gas barrier coating layer is disposed on a side of the inorganic oxide layer facing the sealant layer.

7. The freezing packaging film according to any one of claims 1 to 6 used for frozen storage of a food product whose surface has a color difference ($\Delta$E) of 10 or more when subjected to frozen storage at -25°C for one month in a packaging bag produced from a laminate film formed of a 12 $\mu$m-thick polyethylene terephthalate substrate, a 15 $\mu$m-thick Nylon film, and a 60 $\mu$m-thick sealant layer made of a linear low density polyethylene resin.

8. A freezing packaging bag produced from the freezing packaging film according to any one of claims 1 to 7.

9. A frozen food package comprising: the freezing packaging bag according to claim 8; and a frozen food contained as contents in the freezing packaging bag.

10. A method for evaluating preservation performance of a freezing packaging film, the method comprising

producing a freezing packaging bag from a freezing packaging film having transparency, in which a reagent is provided as contents, the reagent containing 0.14 mass% of methylene blue and having L* of 55 to 65, a* of 3 to 9 and b* of 45 to 55 in a L*a*b* color system; and
measuring a color difference ($\Delta$E) on a surface of the contents after frozen storage of the freezing packaging bag at -20°C for 2 weeks, wherein
evaluation of preservation performance is performed based on the color difference.

# FIG.1

# FIG.2

# FIG.3

<div align="center">

**INTERNATIONAL SEARCH REPORT**

</div>

| | International application No. |
|---|---|
| | PCT/JP2021/005034 |

**A. CLASSIFICATION OF SUBJECT MATTER**
B65D 81/24(2006.01)i
FI: B65D81/24 D
According to International Patent Classification (IPC) or to both national classification and IPC

**B. FIELDS SEARCHED**

Minimum documentation searched (classification system followed by classification symbols)
B65D81/24

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-1378 A (TOYOBO BOSEKI KABUSHIKI KAISHA) 11 January 1994 (1994-01-11) paragraphs [0004]–[0024] | 1, 7–10 |
| Y | JP 2005-231701 A (TOPPAN PRINTING CO., LTD.) 02 September 2005 (2005-09-02) paragraph [0032] | 1, 7–10 |
| A | JP 2006-27695 A (TOPPAN PRINTING CO., LTD.) 02 February 2006 (2006-02-02) paragraphs [0070]–[0072] | 1, 7–10 |
| A | JP 6-1369 A (TOYOBO BOSEKI KABUSHIKI KAISHA) 11 January 1994 (1994-01-11) paragraphs [0004]–[0021] | 1, 7–10 |
| A | JP 6-1370 A (TOYOBO BOSEKI KABUSHIKI KAISHA) 11 January 1994 (1994-01-11) paragraphs [0004]–[0021] | 1, 7–10 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 April 2021 (16.04.2021) | 27 April 2021 (27.04.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/005034 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
      because they relate to subject matter not required to be searched by this Authority, namely:

2. ☐ Claims Nos.:
      because they relate to parts of the international application that do not comply with the prescribed requirements to such an extent that no meaningful international search can be carried out, specifically:

3. ☐ Claims Nos.:
      because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: Claim 1, claims 7-9 referring to claim 1, and claim 10

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.

PCT/JP2021/005034

| Patent Documents referred in the Report | Publication Date | Patent Family | Publication Date |
|---|---|---|---|
| JP 6-1378 A | 11 Jan. 1994 | (Family: none) | |
| JP 2005-231701 A | 02 Sep. 2005 | (Family: none) | |
| JP 2006-27695 A | 02 Feb. 2006 | (Family: none) | |
| JP 6-1369 A | 11 Jan. 1994 | (Family: none) | |
| JP 6-1370 A | 11 Jan. 1994 | (Family: none) | |

Form PCT/ISA/210 (patent family annex) (January 2015)

**INTERNATIONAL SEARCH REPORT**

International application No.

PCT/JP2021/005034

<Continuation of Box No. III>

Document 1: JP 6-1378 A (TOYOBO BOSEKI KABUSHIKI KAISHA) 11 January 1994 (1994-01-11) paragraphs [0004]-[0024]

Claims are divided into the three inventions below

(Invention 1) Claim 1, claims 7-9 referring to claim 1, and claim 10
Claim 1 and claims 7-9 referring to claim 1 have the special technical feature of a "packaging film for refrigeration having transparency, wherein the color difference ($\Delta E$) of the surface of contents is 30 or less when a reagent containing 0.14 mass% of methylene blue and having L* of 55-65, a* of 3-9, and b* of 45-55 in an L*a*b color system is filled as contents and frozen and preserved for 2 weeks at a temperature of -20 °C," and are thus classified as invention 1.
In addition, claim 10 have the technical feature, which corresponds to said special technical feature, of a "method for evaluating preservability of a packaging film for refrigeration having transparency based on a color difference, the method comprising the steps of: filling a packaging film for refrigeration having transparency with a reagent containing 0.14 mass% of methylene blue and having L* of 55-65, a* of 3-9, and b* of 45-55 in an L*a*b color system as contents to make the packaging film into a packaging bag for refrigeration; measuring the color difference ($\Delta E$) of the surface of contents when the packaging bag for refrigeration is frozen and preserved for 2 weeks at a temperature of -20 °C," and is thus classified as invention 1.

(Invention 2) Claim 2, and claims 7-9 referring to claim 2
Claim 2, and claims 7-9 referring to claim 2 share the common technical feature of a "packaging film for refrigeration having transparency" with claim 1 classified as invention 1. However, said technical feature does not make a contribution over the prior art in light of the disclosure of document 1 (particularly, see paragraph [0011]), and thus cannot be considered a special technical feature. Also, there are no other identical or corresponding special technical features between claim 2 and claims 7-9 referring to claim 2, and claim 1.
Furthermore, claim 2, and claims 7-9 referring to claim 2 are not dependent on claim 1. Moreover, claim 2, and claims 7-9 referring to claim 2 are not substantially identical or equivalent to any of the claims classified as invention 1.
Therefore, claim 2, and claims 7-9 referring to claim 2 cannot be classified as invention 1.
In addition, claim 2, and claims 7-9 referring to claim 2 have the special technical feature of a "packaging film for refrigeration having transparency including a gas-barrier film having an oxygen permeability of 2 cc/m²·day·atm or less according to JIS K-7126," and are thus classified as invention 2.

Form PCT/ISA/210 (extra sheet) (January 2015)

**INTERNATIONAL SEARCH REPORT**

International application No.

PCT/JP2021/005034

(Invention 3) Claim 3, and claims 4-9 referring to claim 3

Claim 3, and claims 4-9 referring to claim 3 share the common technical feature of a "packaging film for refrigeration having transparency" with claim 1 classified as invention 1 and claim 2 classified as invention 2. However, said technical feature does not make a contribution over the prior art in light of the disclosure of document 1 (particularly, see paragraph [0011]), and thus cannot be considered a special technical feature. Also, there are no other identical or corresponding special technical features between claim 3 and claims 4-9 referring to claim 3, and claim 1 or 2.

In addition, claim 3 and claims 4-9 referring to claim 3 are not dependent on any of claims 1 and 2. Moreover, claim 3, and claims 4-9 referring to claim 3 are not substantially identical or equivalent to any of the claims classified as invention 1 or 2.

Thus, claim 3 and claims 4-9 referring to claim 3 cannot be classified as either invention 1 or invention 2.

In addition, claim 3, and claims 4-9 referring to claim 3 have the special technical feature of a "packaging film for refrigeration having transparency comprising: a gas-barrier film; and a sealant layer, wherein the gas-barrier film includes a film substrate and an inorganic oxide layer which is provided on the sealant layer side on the film substrate and contains inorganic oxides," and are thus classified as invention 3.

Form PCT/ISA/210 (extra sheet) (January 2015)